# EUROPÄISCHE PATENTSCHRIFT

(11) **EP 0 692 652 B1**
(45) Veröffentlichungstag und Bekanntmachung des Hinweises auf die Patenterteilung: **04.02.1998**
(21) Anmeldenummer: 95110772.1
(22) Anmeldetag: 11.07.1995
(51) Int. Cl.: F16D 66/02

(54) **Anordnung zum Überwachen der Abnutzung einer Bremsbacke**
Arrangement for monitoring wear of a brake shoe
Agencement pour l'indication de l'usure d'un patin à frein

(30) Priorität: 11.07.1994 DE 4424084
(43) Veröffentlichungstag der Anmeldung: 17.01.1996
(73) Patentinhaber: TEXTAR GmbH, 51375 Leverkusen (DE)
(72) Erfinder: Foss, Peter, D-53175 Bonn (DE)
(74) Vertreter: Dallmeyer, Georg, Dipl.-Ing.

(56) Entgegenhaltungen:
- EP-A- 0 419 023
- DE-A- 4 006 616
- DE-C- 3 204 305

## Beschreibung

Die Erfindung betrifft eine Anordnung zum Überwachen der Abnutzung einer Bremsbacke, insbesondere Scheibenbremsbacke für Kraftfahrzeuge, wobei die Anordnung aus einem hitzebeständigen, elektrisch isolierenden Körper besteht, der sich mit einer Körperfläche an der Belagträgerplatte auf der dem Reibbelag zugewandten Seite in einem reibbelagfreien Bereich abstützt und in dem ein elektrischer Leiter eingebettet ist, der bei Erreichen der Abnutzungsgrenze mit der Bremsscheibe in Kontakt gelangt, wodurch eine Warnanzeige ausgelöst wird und wobei zur Befestigung des elektrisch isolierten Körpers in einer Ausnehmung der Trägerplatte oder einem Hohlniet in einer Aussparung der Trägerplatte, ein Fortsatz, der im montierten Zustand in die Ausnehmung oder den Hohlniet hineinreicht, angebracht ist.

Verschleißanzeiger der vorstehenden Art sind in verschiedenen Ausführungsformen bekannt. Es ist aus der älteren Anmeldung DE 32 33 634 bekannt, eine Verschleißüberwachungseinrichtung zu verwenden, die einen hitzebeständigen, elektrisch isolierenden Stützkörper aufweist, einen elektrischen Leiter aufnimmt und die mittels eines integrierten Zapfens in einem Hohlniet an der Belagträgerplatte befestigt ist.

Die sichere Befestigung des Stützkörpers wird dabei über eine Ringnut an einem Zapfen, die eine Feder, z.B. in Form eines Sprengringes aufnimmt, ermöglicht. Im Hohlniet wird diese Feder gegen eine innere Schulter axial verspannt. Nachteilig ist dabei, daß der Fortsatz ein separat befestigtes Teil bildet, was teurer und montageaufwendiger ist. Zudem ist die sichere und rüttelfeste Befestigung nur unter Einhaltung geringer Toleranzen möglich.

Die DE 39 04 673 beschreibt eine einstückige Ausbildung des Verschleißanzeigerkörpers und des Fortsatzes. Dabei wird die Halteaufgabe ebenso durch ein Rastelement verwirklicht, wobei dieses ein Schulterelement in einer Ausnehmung der Belagträgerplatte untergreift und somit eine rein formschlüssige Befestigung gewährleistet.
Als Sicherungselemente gegen Löser dienen wiederum Federelemente. Nachteilig ist dabei, daß die Aufnahme für den Fortsatz in der Trägerplatte so ausgebildet sein muß, daß die Federelemente untergreifen können.
Dazu sind aufwendige Bearbeitungsvorgänge an der Belagträgerplatte notwendig, z.B. die Herstellung von Schrägflächen in der Bohrung.

Weiterhin ist aus der deutschen Offenlegungsschrift DE 39 17 854 bekannt, die Befestigung eines Verschleißanzeigerelementes mit Fortsatz mittels eines Hohlklips zu realisieren, wobei der Fortsatz, der am Ende eine Spreng- oder O-Ring trägt, durch die Öffnung des Hohlkörpers ragt und mittels der Feder verspannt wird.
Diese Lösung bedarf genauso mehrerer separater Teile, die vormontiert werden müssen und montageaufwendig sind. Ein sicherer Sitz ist nur unter Einhaltung geringer Toleranzen möglich.

Aufgabe der Erfindung ist es daher, einen Verschleißanzeiger der anfangs genannten Art zu schaffen, der einfach und kostengünstig herzustellen ist, mit dem die Montagearbeiten erheblich erleichtert und ein fester Sitz mit definiertem Warnpunkt garantiert werden kann und der in geometrisch einfachen Ausnehmungen befestigt werden kann.

Diese Aufgabe wird durch die im kennzeichnenden Teil von Patentanspruch 1 aufgeführten Merkmale gelöst. Weitere vorteilhafte Ausbildungen des Verschleißanzeigers sind in den abhängigen Ansprüchen angegeben.

Der Verschleißanzeiger der Erfindung zeichnet sich dadurch aus, daß der elektrisch isolierende Körper und der Fortsatz mit einer Ausnehmung versehen ist, der Fortsatz eine spreizfähige Hülse darstellt, die kürzer als die Ausnehmung ist und daß von der dem Fortsatz abgewandten Seite des isolierenden Körpers ein Stift in die Ausnehmung hineingeschoben ist, der in den Fortsatz ragt, um den elastischen Fortsatz (12) innerhalb der Ausnehmung (7) zu spreizen.

Der Verschleißanzeiger kann bevor der Stift durch die Ausnehmung geschoben wird, mit dem Fortsatz in eine entsprechende Ausnehmung der Trägerplatte oder in einem an der Belagträgerplatte angebrachten Hohlniet eingebracht werden.
Anschließend wird der Stift durch die Ausnehmung geschoben und der elastische Fortsatz im Niet oder der Belagträgerplattenausnehmung gespreizt, so daß diese den Fortsatz verkeilt. Dadurch hat der Verschleißanzeiger einen festen Sitz und es ist eine ausreichende axiale Befestigung und Verdrehsicherung über den Kraftschluß gegeben.

Dazu ist der Stift vorzugsweise an dem Ende, das in die Ausnehmung eingeführt wird kegelstumpfförmig ausgebildet, so daß die Keilflächen entsprechend angebrachte Gegenkeilflächen in der Hülse beim Hineinschieben auseinanderdrücken und dadurch zwischen der äußeren Fläche des Fortsatzes und der Ausnehmung eine kraftschlüssige Verbindung hergestellt wird.

Vorzugsweise sind der elektrisch isolierende Körper, der Fortsatz und der Stift Kunststofformteile, die aus einem Material bestehen, so daß die Herstellkosten gering gehalten werden können.

Vorzugsweise ist vorgesehen, daß der isolierende Körper, der Fortsatz und der Stift einstückig ausgebildet ist. D.h. der Fortsatz und der Stift sind an den Verschleißanzeigerkörper angespritzt, so daß der Stift in der vormontierten Lage mittels dünnwandigen Verbindungen angespritzt ist wobei diese dünnwandigen Verbindungen eine Sollbruchstelle darstellen. Dadurch kann eine Vormontage entfallen und das gespritzte Teil direkt verwendet werden. Zusätzliche Teile, wie Federn, Sprengringe und O-Ringe entfallen.
Eine weitere vorteilhafte Ausbildung zeichnet sich dadurch aus, daß der angespritzte Kunststoffortsatz einfach oder mehrfach in axialer Richtung geschlitzt ist, so daß dadurch die elastischen Eigenschaften des Fortsatzes beeinflußt werden können.

Das vom Verschleißanzeiger abgewandte Ende des Kunsstofffortsatzes kann mit äußeren Schultern versehen sein, die entsprechende Gegenschultern in der zur Aufnahme vorgesehenen Ausnehmung hintergreifen können, so daß der Verschleißanzeiger zusätzlich formschlüssig in axialer Richtung gesichert ist.
Fortsätze der beschriebenen Art lassen sich im Spritzgießverfahren einfach und kostengünstig herstellen.
Eine Montage ist in allen kreisförmigen Ausnehmungen einer Belagträgerplatte in reibbelagfreien Bereichen möglich.

Die Erfindung wird anhand der in den Zeichnungen dargestellten Ausführungsbeispielen nachstehend erläutert:

Es zeigen
- Fig.1: eine Seitenansicht einer Bremsbacke mit installiertem Verschleißanzeiger
- Fig. 2: eine Draufsicht auf die Bremsbackenanordnung gem. Fig. 1
- Fig. 3: eine Draufsicht auf eine Bremsbackenanordnung gem. Fig. 1, jedoch mit Niet zur Federbefestigung
- Fig. 4: einen Schnitt I-I der Bremsbacke gemäß Fig. 1, jedoch mit vormontiertem Verschleißanzeiger
- Fig. 5: einen Schnitt I-I der Bremsbacke gemäß Fig. 1, mit fertigmontiertem Verschleißanzeiger
- Fig. 6: einen Schnitt I-I der Bremsbacke gemäß Fig. 1, jedoch mit zusätzlicher formschlüssiger Sicherung des Verschleißanzeigers
- Fig. 7: einen Schnitt durch eine Verschleißanzeigeranordnung gemäß Fig. 3, die in einem Hohlniet befestigt ist.
- Fig. 8: einen Schnitt durch einen einstückig ausgebildeten Kunststoffverschleißanzeigerkörper mit angespritztem Stift.
- Fig. 9: eine Variante eines einstückig ausgebildeten Verschleißanzeigerkörpers mit angespritztem Stift.

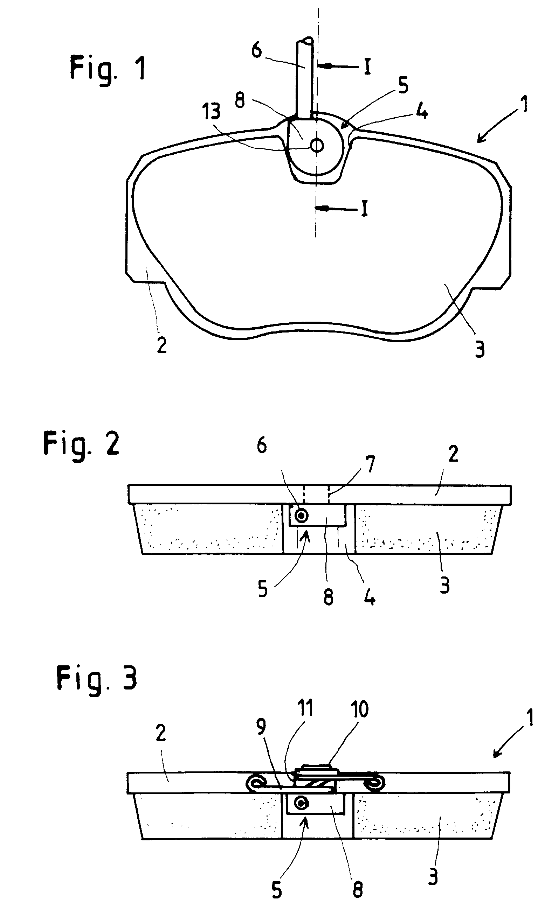

In Fig. 1 ist eine Bremsbacke 1 für eine Teilbelag-Scheibenbremse für Kraftfahrzeuge in Blickrichtung auf die Reibbelag-Seite dargestellt. Die Bremsbacke 1 besteht aus einer aus Stahlblech ausgestanzten Belagträgerplatte 2, worauf durch ein Preßverfahren der Reibbelag 3 aufgebracht ist. Im mittleren Bereich, radial außen, ist die Belagverschleiß-anzeige 5, in der ein elektrischer Leiter 6 eingebettet ist, in einen reibbelagfreien Teil 4 der Belagträgerplatte 2 angebracht.

Der Belagverschleißanzeiger ist in einer Ausnehmung 7 der Belagträgerplatte (in Fig. 2 gestrichelt dargestellt) befestigt. Die Tiefe der Belagverschleißanzeige, d.h. die Lage des elektrischen Leiters 6, ist geringer als die Dicke des Reibbelages 3 und so bemessen, daß, nachdem der Reibbelag 3 bis zu einer bestimmten Tiefe abgenutzt ist, nach dem Verschleiß des elektrisch isolierenden Körpers 8 bis zur Leiterschleife, der elektrische Leiter 6 mit der Bremsscheibe in Kontakt kommt und so eine Warnanzeige auslöst.

Fig. 3 zeigt eine Ausführungsvariante einer Bremsbacke 1 in der Draufsicht, die mit einer Haltefeder 9 ausgerüstet ist, wobei die Haltefeder 9 mittels eines Hohlnietes 10 in einer Aussparung 11 der Trägerplatte 2 radial außen im mittleren Bereich der Belagträgerplatte befestigt ist. Der Hohlniet 10 wird dabei zu Aufnahme und Befestigung der Belagverschleißanzeige 5 genutzt.

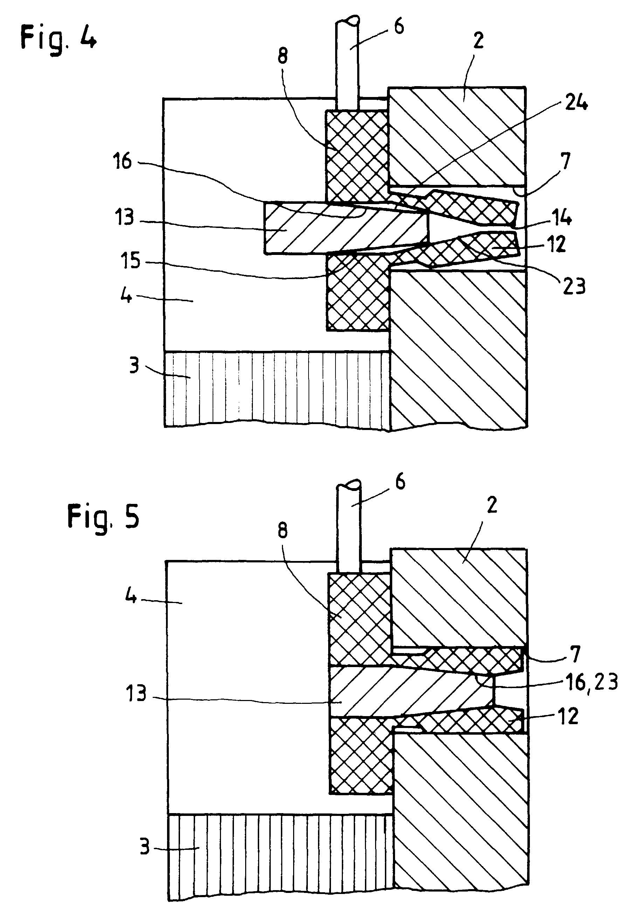

Fig. 4 zeigt den Aufbau der Verschleißanzeiger-Befestigung im Schnitt vor Abschluß der Montage. Dabei wird der vormontierte Belagverschleißanzeiger 5, bestehend aus dem elektrisch isolierenden Körper 8, dem elastischen Fortsatz 12, einem zylindrischen Stift 13 und dem elektrischen Leiter 6 in eine Ausnehmung 7 der Belagträgerplatte, die in einem reibbelagfreien Bereich 4 liegt, eingebracht. Der Fortsatz 12 weist einen Schlitz in axialer Richtung auf, so daß im letzten Montageschritt der Stift 13 die elastischen Fortsätze 12 verkeilen kann. Dazu ist die Innenfläche 23 der Ausnehmung im elastischen Fortsatz 12 keilförmig ausgebildet, wodurch die Keilwirkung verstärkt wird

In Fig. 5 ist die fertigmontierte Verschleißanzeigervorrichtung dargestellt. Der Stift 13 wurde in die Ausnehmung 15 des isolierenden Körpers 8 und des Fortsatzes 12 geschoben, wobei die Flächen 16 des kegelstumpfförmigen Endes 16,23 des Stiftes 13 die elastischen Fortsätze 12 gegen die Innenfläche der Ausnehmung 7 der Belagträgerplatte 2 pressen und eine kraftschlüssige Verbindung gewährleistet wird.

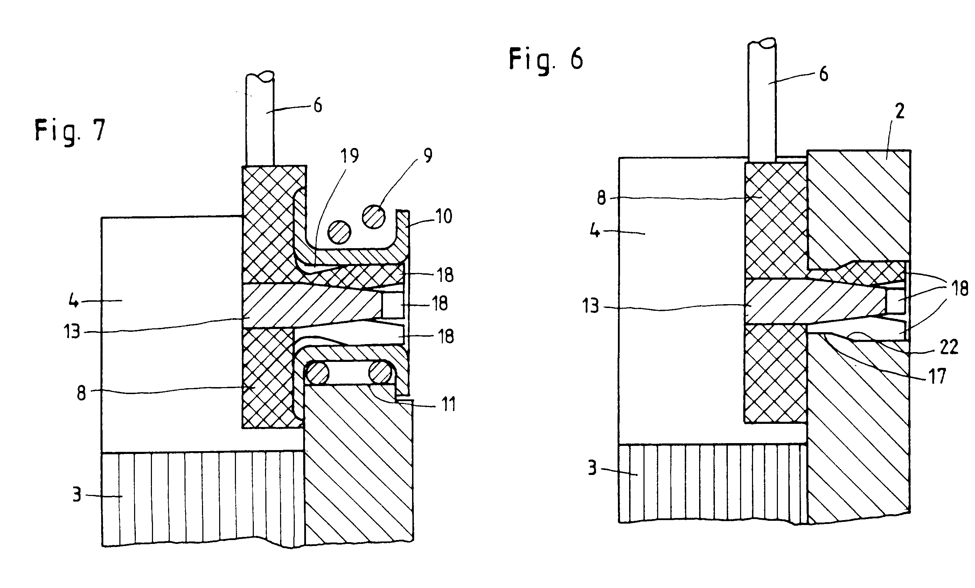

Fig. 6 zeigt eine Variante der in Fig. 5 dargestellten Verschleißanzeiger-Befestigung, wobei der elastische Fortsatz 12 so ausgebildet ist, daß er eine in der Ausnehmung 7 der Belagträgerplatte 2 angebrachte Schulter 17 untergreifen kann, so daß eine formschlüssige, axial wirkende Verbindung hergestellt wird. Der Fortsatz 12 kann wie hier gezeigt derart in axialer Richtung geschlitzt sein, daß 3 einzelne federnde Zungen 18 gebildet werden. Durch eine derartige Form als auch durch die Materialauswahl kann die Elastizität des Fortsatzes beeinflußt werden.

In Fig. 7 wird die Befestigung eines Verschleißanzeigers nach den Ansprüchen in einem Hohlniet 10 dargestellt. Der Hohlniet 10 hat die eigentliche Aufgabe, die Haltefeder 9, eine gewendelte Drahtfeder, an der Belagträgerplatte 2 in einer Aussparung 11 in einem reibbelagfreien Teil 4 derselben zu halten.
Bei dieser Variante kann die zentrale Ausnehmung 19 des Hohlnietes 10 zur Aufnahme und Befestigung des elastischen Fortsatzes 12 genutzt werden.

Es ist durchaus sinnvoll, den Hohlniet 10 in seiner Ausnehmung am reibbelagseitigen Ende mit Schultern 17 zu versehen, um auch für diesen Fall eine formschlüssige Verbindung zu ermöglichen.

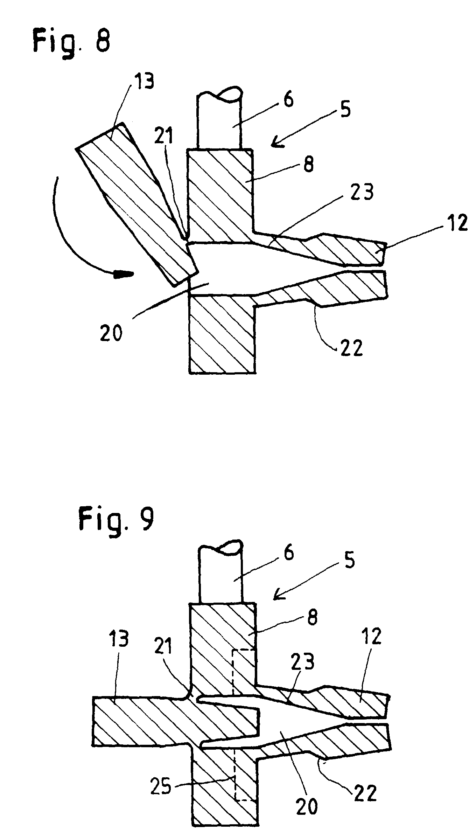

Fig. 8 und Fig . 9 zeigen zwei Varianten eines einteiligen Verschleißanzeigerkörpers 8 im einbaufähigen Zustand, wobei der Stift 13 über dünne Wände 21 angespritzt ist, d.h. der elastische Fortsatz 12, der Stift 13 und der isolierende Körper 8 aus einem Material bestehen. Dadurch vereinfacht sich der Herstellprozeß erheblich, da die Teilezahl vermindert wird.

Zur Montage werden die dünnwandigen Verbindungen 21 ,die Sollbruchstellen darstellen, durch mechanische Einwirkung gebrochen und der frei werdende Stift 13 wird in die Ausnehmung 20 des Verschleißanzeigerkörper mit seinem Fortsatz eingebracht.

Bei nicht mehr im Spritzgießverfahren herstellbaren Geometrien kann der elastische Fortsatz 12 separat hergestellt werden, um dann in einer entsprechenden Aussparung 25 (in Fig. 9 gestrichelt dargestellt) eingesetzt und verbunden zu werden.

## Patentansprüche

1. Anordnung zum Überwachen der Abnutzung einer Bremsbacke (1), insbesondere Scheibenbremsbacke für Kraftfahrzeuge, wobei die Anordnung aus einem hitzebeständigen elektrisch isolierten Körper (8) besteht, der sich mit einer Körperfläche an der Belagträgerplatte (2) auf der dem Reibbelag (3) zugewandten Seite in einem reibbelagfreien Bereich (4) abstützt und in dem ein elektrischer Leiter (6) eingebettet ist, der bei Erreichen der Abnutzungsgrenze mit der Bremsscheibe in Kontakt gelangt, wodurch eine Warnanzeige ausgelöst wird und wobei zur Befestigung des elektrisch isolierten Körpers (8) in einer Ausnehmung (7) der Trägerplatte (2) oder einem Hohlniet (10) in einer Aussparung (11) der Trägerplatte (2) ein Fortsatz (12), der im montierten Zustand in die Ausnehmung (7) oder den Hohlniet (10) hineinreicht, angebracht ist, dadurch gekennzeichnet, daß
- der elektrisch isolierende Körper (8) und der Fortsatz (12) mit einer Ausnehmung (15,20) versehen sind,
- der Fortsatz (12) eine elastische spreizfähige Hülse ist,
- der Fortsatz kürzer als die Ausnehmung, d.h. Stärke der Trägerplatte (2), beziehungsweise kürzer als der Hohlniet (10) ist.
- von der dem Fortsatz (12) abgewandten Seite des isolierenden Körpers (8) ein Stift (13) in die Ausnehmung (15) hineingeschoben ist, der in den Fortsatz (12) ragt, um diesen zu spreizen.

2. Anordnung nach Anspruch 1, dadurch gekennzeichnet, daß der Fortsatz (12) im Außendurchmesser so beschaffen ist, daß er unter leichtem Druck in die Ausnehmung (7) oder den Hohlniet (19) eingeführt werden kann.

3. Anordnung nach Anspruch 2, dadurch gekennzeichnet, daß der Fortsatz (12) mindestens einmal in axialer Richtung geschlitzt ausgeführt ist, um eine Federwirkung zu erreichen.

4. Anordnung nach Anspruch 3, dadurch gekennzeichnet, daß der Fortsatz (12) an seinem Ende mit einer Schulter (22) versehen ist, die eine in der Ausnehmung (7) angebrachte Schulter (17) hintergreift, um eine axiale formschlüssige Befestigung zu ermöglichen.

5. Anordnung nach einem der vorhergehenden Ansprüche, dadurch gekennzeichnet, daß der elektrisch isolierende Körper (8), der Fortsatz (12) und Stift (13) aus einem Material bestehen.

6. Anordnung nach Anspruch 5, dadurch gekennzeichnet, daß der isolierende Körper (8), der Fortsatz (12) und der Stift (13) Kunststofformteile sind.

7. Anordnung nach Anspruch 6, dadurch gekennzeichnet, daß der elektrisch isolierende Körper (8) und der Stift (13) einstückig hergestellt sind, wobei der Stift (13) am elektrisch isolierten Körper (8) auf der dem Fortsatz (12) abgewandten Seite angespritzt ist und über Sollbruchstellen (21) montagefähig ist.

8. Anordnung nach Anspruch 6, dadurch gekennzeichnet, daß der elektrisch isolierende Körper (8), der Fortsatz (12) und der Stift (13) einstückig hergestellt sind, wobei der Stift (13) am elektrisch isolierten Körper (8) auf der dem Fortsatz (12) abgewandten Seite angespritzt ist und über Sollbruchstellen (21) montagefähig ist.

9. Anordnung nach einem der vorhergehenden Ansprüche, dadurch gekennzeichnet, daß der Stift (13) an einem Ende kegelstumpfförmig ausgebildet ist.

10. Anordung nach Anspruch 8, dadurch gekennzeichnet, daß in der Ausnehmung (15) der elastischen Hülse (12) innere Keilflächen (23) ausgebildet sind, die mit der Mantelfläche (24) des Kegelstumpfes des Stiftes (13) in Funktion treten.

## Claims

1. An arrangement for monitoring the wear of a brake jaw (1), in particular a disc brake jaw for vehicles, the arrangement consisting of a heat-resistant electrically insulating body (8), one body surface being supported at the lining support plate (2) on the side facing toward the friction lining (3) in a portion (4) free of friction lining, an electrical conductor (6) being embedded in said body which comes into contact with the brake disc when reaching the wear limit, whereby an alarm is triggered, and wherein a projection (12) is provided for fastening said electrically insulating body (8) in a recess (7) of said support plate (2) or in a hollow rivet (10) in a recess (11) of said support plate (2), said projection, when mounted, extending into said recess (7) or said hollow rivet (10), characterized in that
- said electrically insulating body (8) and said projection (12) are provided with a recess (15, 20), respectively,
- said projection (12) is an elastic spreadable sleeve,
- said projection is shorter than said recess, i.e. the thickness of the support plate (2) or said hollow rivet (10),
- a pin (13) is pushed into said recess (15) from the side of said insulating body (8) averted from said projection (12), said pin extending into said projection (12) to spread the same.

2. The arrangement of claim 1, characterized in that said projection (12) has an outer diameter designed such that it may be inserted into said recess (7) or said hollow rivet (19) under little pressure.

3. The arrangement of claim 2, characterized in that said projection (12) is axially slit at least once so as to achieve a resilient effect.

4. The arrangement of claim 3, characterized in that the end of said projection is provided with a shoulder (22) engaging behind a shoulder (17) in said recess (7) so as to allow for an axially interlocking fastening.

5. The arrangement of one of the preceding claims, characterized in that said electrically insulating body (8), said projection (12) and said pin (13) are made from one material.

6. The arrangement of claim 5, characterized in that said insulating body (8), said projection (12) and said pin (13) are shaped plastics parts.

7. The arrangement of claim 6, characterized in that said insulating body (8) and said pin (13) are formed integrally, the pin (13) being injection molded onto said electrically insulating body (8) on the side averted from said projection (12) and may be mounted by means of rated breaking points (21).

8. The arrangement of claim 6, characterized in that said insulating body (8), said projection (12) and said pin (13) are formed integrally, the pin (13) being injection molded onto said electrically insulating body (8) on the side averted from said projection (12) and may be mounted by means of rated breaking points (21).

9. The arrangement of one of the preceding claims, characterized in that one end of said pin (13) is shaped as a truncated cone.

10. The arrangement of claim 8, characterized in that said recess (15) of said elastic sleeve (12) has its inside provided with inner wedge surfaces (23) cooperating with the outer surface (24) of said truncated cone of said pin (13).

## Revendications

1. Agencement pour la surveillance de l'usure d'un patin de frein (1), en particulier d'une plaquette de frein à disque pour automobiles, agencement se composant d'un corps (8) isolé électriquement, résistant aux températures élevées, qui s'appuie par une surface de corps contre la plaque support de garniture (2) sur la face tournée vers la garniture de friction (3) dans une zone (4) dépourvue de garniture de friction, et dans lequel un conducteur électrique (6) est incorporé, conducteur qui vient en contact avec le disque de frein lorsqu'une limite d'usure est atteinte, ce par quoi un témoin est déclenché, et, pour la fixation du corps (8) isolé électriquement, un appendice (12) est placé dans un logement (7) de la plaque support (2) ou dans un rivet tubulaire (10) situé dans un évidement (11) de la plaque support (2), appendice qui à l'état monté est engagé dans le logement (7) ou le rivet tubulaire (10), caractérisé par le fait que :
- le corps isolant électriquement (8) et l'appendice (12) sont munis d'un logement (15, 20),
- l'appendice (12) est constitué par une douille expansible élastique,
- l'appendice est plus court que le logement, c'est-à-dire plus petit que l'épaisseur de la plaque support ou plus court que le rivet tubulaire (10),
- une cheville (13) est enfoncée dans le logement (15) depuis la face du corps isolant (8) éloignée de l'appendice (12), laquelle cheville s'engage dans l'appendice (12) pour provoquer l'expansion de celui-ci.

2. Agencement selon la revendication 1, caractérisé par le fait que l'appendice (12) est réalisé, en ce qui concerne son diamètre extérieur, de telle sorte qu'il peut être introduit sous une légère pression dans le logement (7) ou dans le rivet tubulaire (19).

3. Agencement selon la revendication 2, caractérisé par le fait que 1' appendice (12) est réalisé avec au moins une fente dans la direction axiale, pour obtenir un effet de ressort.

4. Agencement selon la revendication 3, caractérisé par le fait que 1' appendice (12) est muni à son extrémité d'un épaulement (22) qui vient en prise derrière un épaulement (17) aménagé dans le logement (7), pour permettre une fixation axiale à engagement positif.

5. Agencement selon l'une des revendications précédentes, caractérisé par le fait que le corps isolant électriquement (8), 1' appendice (12) et la cheville (13) se composent d'une seule matière.

6. Dispositif selon la revendication 5, caractérisé par le fait que le corps isolant (8), 1' appendice (12) et la cheville (13) sont des pièces moulées en matière plastique.

7. Agencement selon la revendication 6, caractérisé par le fait que le corps isolant électriquement (8) et la cheville (13) sont réalisés d'une seule pièce, la cheville (13) étant moulée par injection sur le corps isolé électriquement (8) sur la face éloignée de l'appendice (12) et étant apte au montage du fait d'emplacements de rupture (21).

8. Agencement selon la revendication 6, caractérisé par le fait que le corps isolant électriquement (8), 1' appendice (12) et la cheville (13) sont réalisés d'une seule pièce, la cheville (13) étant moulée par injection sur le corps isolé électriquement (8) sur la face éloignée de 1' appendice (12) et étant apte au montage du fait d'emplacements de rupture (21).

9. Agencement selon l'une des revendications précédentes, caractérisé par le fait que la cheville (13) est réalisée sous forme tronconique à une extrémité.

10. Agencement selon la revendication 8, caractérisé par le fait que des surfaces en coin (23) intérieures sont formées dans le logement (15) de la douille élastique (12), et coopèrent avec la surface enveloppe (24) du tronc de cône de la cheville (13).
